# EUROPEAN PATENT APPLICATION

(11) **EP 1 855 458 A1**
(43) Date of publication of application: **14.11.2007**
(21) Application number: 07104730.2
(22) Date of filing: 23.03.2007
(51) Int. Cl.: H04N 1/00, H04N 1/21

(54) **Handheld device with a digital album storing compressed images**

(30) Priority: 11.05.2006 CN 200610080510
(71) Applicant: High Tech Computer Corp., Taoyuan (TW)
(72) Inventor: Wang, John C., Taoyuan Hsien (TW)
(74) Representative: Ganahl, Bernhard

(57) **Abstract**

Disclosed is a handheld device (100) with a digital album, comprising an image-capture unit (104) for grabbing an initial image data, an image compression unit (101) for converting the initial image data into compressed data, a memory unit (103) for storing the compressed data and a display unit (102) for displaying the initial data.

## Description

### Field of the Invention

The present invention relates to a handheld device, and more specifically to a handheld device with a digital album for replaying archived images previously captured and its applications.

### Background of the Invention

With the advance of image technology, most of the current handheld electronic devices, such as cell phones and personal digital assistants, have built-in image-capturing units provided for users to capture images conveniently.

In addition to capturing pictures, handheld electronic devices are frequently used to show photos to others. In other words, they are increasingly being used also as makeshift portable digital photo albums.

When a handheld electronic device is used as a digital album for sharing photos with friends, one of the most frequently encountered problems is that only a limited number of photos can be stored on a typical handheld device. This limitation forces the user to delete photos frequently from the handheld device and copy them to a backup storage, typically a personal computer.

Consequently, when a user encounters an impromptu opportunity to share past photos with friends, more often than not some of the memorable past photos would already have been deleted from the handheld device. Remaining for showing are merely the most recent photos that have not yet been deleted. This limitation makes an otherwise happy encounter unsatisfying.

### Summary of the Invention

Therefore, it is desirable to provide a handheld device with a digital album that can keep and display the archived images previously captured by the digital camera. The disclosed invention provides a method that automatically retains a highly memory-efficient shadow copy when a picture undergoes the deletion process. This shadow copy is optimized for display on the specific handheld device. Therefore, even in the absence of the original full-size photo, the full experience of browsing archived images may still be delivered with a full fidelity that matches the display.

One aspect of the present invention is to provide a handheld device with a digital album to store and display archived images without the aid of any extra devices and without enlarging the memory space of the handheld device.

In some embodiments of the present invention, the handheld device comprises an image-capture unit, a display unit, an image-compression unit, and a memory unit. The image-capture unit is used to grab an initial image data for consequentially being displayed on the display unit. The image-compression unit set in the handheld device is used to convert the initial image data into compressed data and stores the compressed data in the memory, wherein the scale of the compressed data is much smaller than that of the original digital image data.

Another aspect of the present invention is to provide a method to configure a digital album for a handheld device to store and display archived images directly thereon without the aid of any extra devices or without enlarging the memory unit of the handheld device.

In some embodiments of the present invention, the method comprises several steps as follows: First, an image-capture unit of the handheld device is used to grab the initial image data by converting a physical image in to digital signals. Next, an image-compression operation is conducted to convert the initial image data into compressed data via an image-compression unit of the handheld device. The compressed data is then stored in the memory unit of the handheld device.

In accordance with above-mentioned descriptions, the features of the present invention are to provide a handheld digital album to display archived images that were previously captured and then were stored as initial image data by an image-capture unit of the handheld device. Therein, an image-compression unit is used to conduct an image compression operation to convert the initial image data into compressed data and then to store the compressed data in a memory unit of the handheld device. Since the scale of the compressed data is much smaller than that of the initial image data, the memory unit can keep more images stored in the form of compressed data than images stored in the form of initial image data. Therefore, the archive image stored in the form of compressed data can be redisplayed directly on a display unit of the handheld device without the aid of any other extra devices or without enlarging the memory unit, even if the initial image data was previously deleted.

### Brief Description of the Drawings

The foregoing aspects and many of the attendant advantages of this invention will become more readily appreciated as the same becomes better understood by reference to the following detailed description, when taken in conjunction with the accompanying drawings, wherein:
Fig.1 illustrates a schematic elements assembly of a cell phone with a digital album in accordance with the first preferred embodiment of the present invention.
Fig. 2 is a flow diagram for configuring a digital album to redisplay archive images captured by the image-capture unit in accordance with the first embodiment of the present invention.
Fig. 3 is a schematic indicating the data flow in accordance with the first embodiment of the present invention.
Fig. 4 is a flow diagram for configuring a digital album for redisplaying archive images captured by the image-capture unit in accordance with the second embodiment of the present invention.
Fig. 5 is a schematic indicating the data flow in accordance with the second embodiment of the present invention.
Fig. 6 is a flow diagram for configuring a digital album to redisplay archive images captured by the image-capture unit in accordance with the third embodiment of the present invention.
Fig. 7 is a schematic indicating the data flow in accordance with the third embodiment of the present invention.

### Detailed Description of the Preferred Embodiment

The objectives of the present invention are to provide a handheld device with a digital album, wherein an image-compression unit is used to convert initial image data previously captured by an image-capture unit into compressed data. The compressed data is then stored in a memory unit of the handheld device to form the digital album. Since the scale of the compressed data is much smaller than that of the initial image data, the memory unit can keep more images stored in the form of compressed data than images stored in the form of initial image data. Therefore the archive image stored in the form of compressed data can be redisplayed directly on a display unit of the handheld device without the aid of any other extra devices or without enlarging the memory unit, even if the initial image data is previously deleted.

In some embodiments of the present invention, the aforementioned digital album is applied in a handheld device comprising an image-capture unit and a built-in display unit. Therein, the image-capture unit incorporates an image-detecting element, such as a charge-couple device (CCD) or a complementary metal oxide semiconductor (CMOS) used to grab initial image data by converting a physical image into digital signals available for the display unit to display the initial image data thereon.

The foregoing aspects and many of the attendant advantages of this invention will become more readily appreciated as it becomes better understood by reference to the following preferred embodiments, hereinafter further described. The handheld device mentioned in these embodiments of the present invention is a cell phone that has a digital camera and display unit set therein. Alternatively, the handheld device may be a personal digital assistant (PDA) that has the same elements (functions) built therein.

In the preferred embodiment, the display unit of the cell pone 100 may be a liquid crystal display (LCD) or organic light emitting diode (OLED) display that complies with the Quarter Video Graphic Array (QVGA) standard.

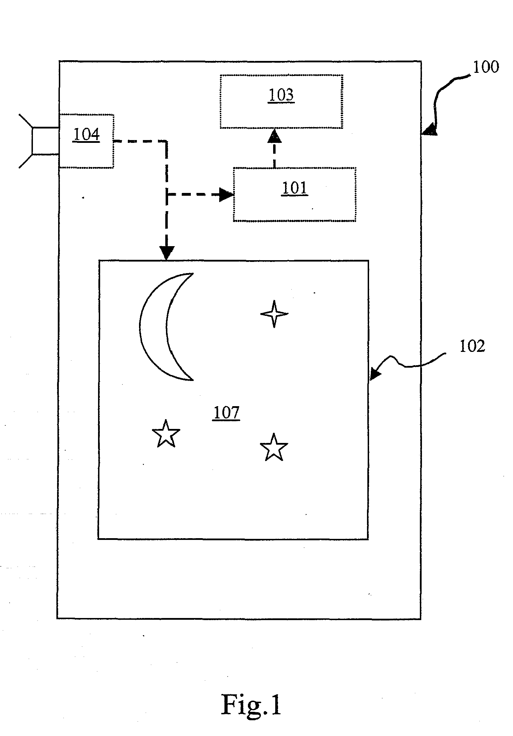

Fig.1 illustrates the schematic elements of the assembly of a cell phone with a digital album in accordance with the first preferred embodiment of the present invention, wherein the cell phone 100 comprises a display unit 102, an image-capture unit 104, a memory unit 103 and an image-compression unit 101. The image-capture unit 104 comprises an image-detecting element, such as a charge-couple device (CCD) or a complementary metal oxide semiconductor (CMOS) used to grab initial image data by converting a physical image into digital signals. In the present embodiment, the initial image data has a resolution of 5 mega pixels. The display unit 102 is an LCD with a resolution of 320x240 (76,800) pixels that can display image data as a standard QVGA photo image 107.

The image-compression unit 101 respectively connected to the display unit 102 and the image-capture unit 104 of the cell phone is used to convert the initial image data into the compressed data via an image compression operation. The compressed data is then stored in the memory unit 103. In some embodiments of the present invention, the image-compression unit 101 comprises a dumping module for duplicating the data stored in a graphics accelerator card or a video card of the handheld device (not shown) or capturing visible items displayed on the display unit 102. When the display unit 102 displays the initial image (shown as the photo image 107), and then the data duplicated or captured by the dumping module is stored as an image backup data into the memory unit 103. Since the resolution of the photo image 107 is counted as 76,800 pixels, the scale of the compressed data is much smaller than that of the initial image data (5 mega pixels) previously captured by the image-capture unit 104.

In another embodiment of the present invention, the image-compression unit 101 is the means for compressing image signals, and is used to compress the digital signals of the initial image data previously captured by the image-capture unit 104 directly. The means for compressing image signals, for example, might be a programmable-logic device (PLD), image-processing software, an image-processing chipset, an image-compression module, an image-processing module or an arbitrary combination of the aforementioned electronic devices or software. In the present embodiment, the means for compressing image signals preferably is image-processing software or an image-processing chipset.

The memory unit 103 set in the cell phone 100 is used to store the initial image data captured by the image-capture unit 104 and the compressed data converted by the image-compression unit 101. In some embodiments of the present invention, the memory unit 103 is divided into two memory areas, such as the first memory area and the second memory area (not shown) to store the initial image data and the compressed data respectively. For example, initial image data is stored in the first memory area, and the compressed data is stored in the second memory area. In some other embodiments the initial image data and the compressed data are stored in the same memory area.

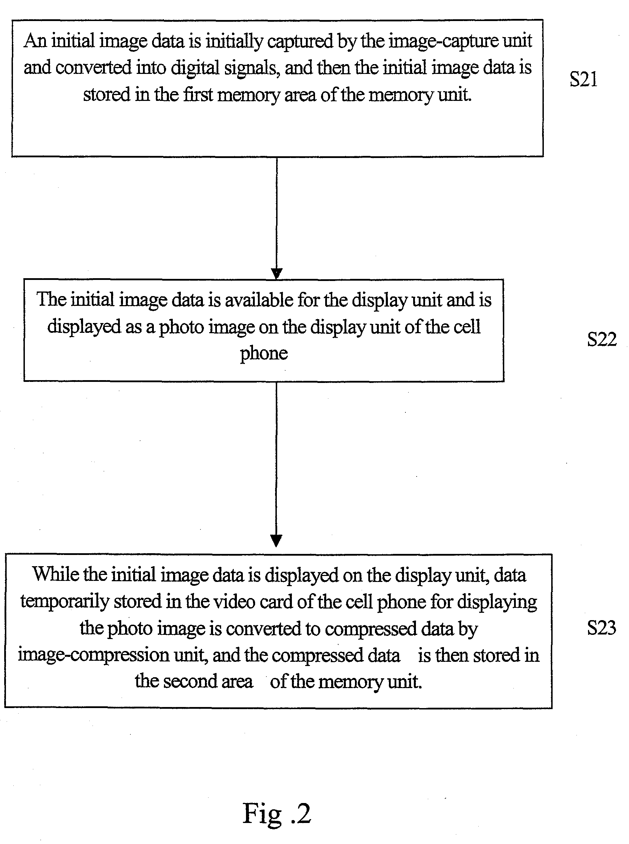

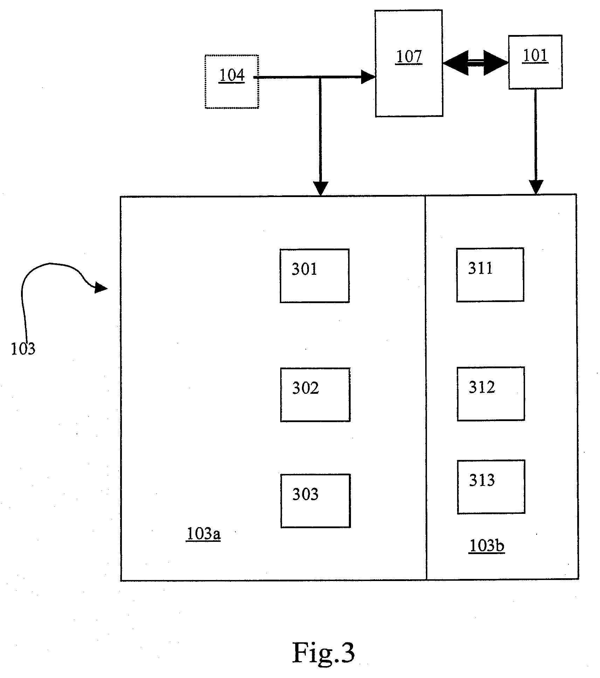

Fig. 2 is a flow diagram for configuring a digital album to redisplay archived images captured by the image-capture unit in accordance with the first embodiment of the present invention. Fig. 3 is a schematic indicating the data flow in accordance with the first embodiment of the present invention.

Referring to Fig. 2 and Fig. 3, initial image data, such as 301, 302, or 303, is initially captured by the image-capture unit 104 and converted into digital signals, and then the initial image data 301 (302 or 303) is stored in the first memory area 103a of the memory unit 103, shown as step S21. At the same time, the initial image data 301 (302 or 303) is available for the display unit 102 and is displayed as a photo image 107 on the display unit 102 of the cell phone 100, shown as step S22. While the initial image data 301 (302 or 303) is displayed on the display unit 102 (referring to step S23), data temporarily stored in the graphics accelerator card or the video card (not shown) of the cell phone 100 (for displaying the photo image 107) is duplicated and is then stored as compressed data 311 (312 or 313) by image-compression unit 101, and the compressed data 311 (312 or 313) is then stored in the second area 103b of the memory unit 103.

The image-compression unit 101 may conduct the backup operation automatically, while the initial image data is captured. However, in another embodiment of the present invention, the image-compression unit 101 may not conduct the backup operation, until the user of the handheld device submits a command. While the initial image data is captured and displayed, the image-compression unit 101 may inform the user to select whether or not to conduct the backup operation.

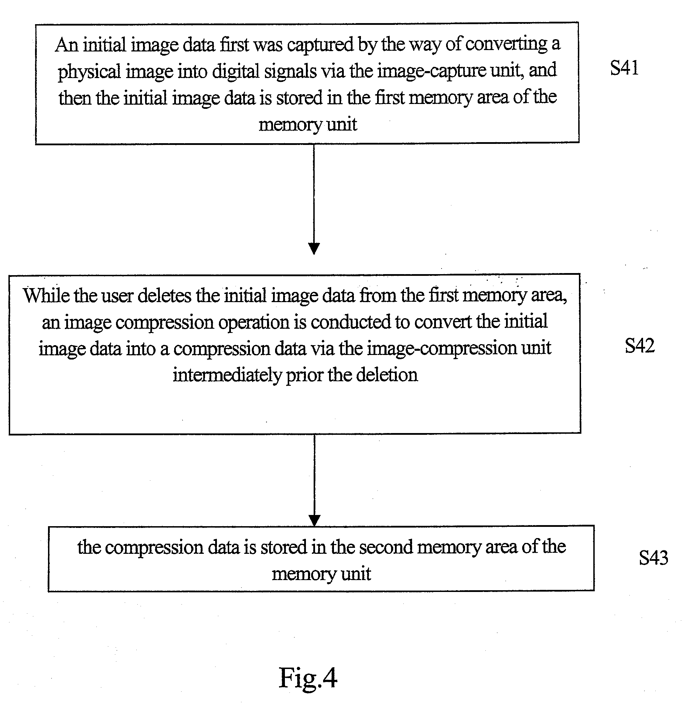

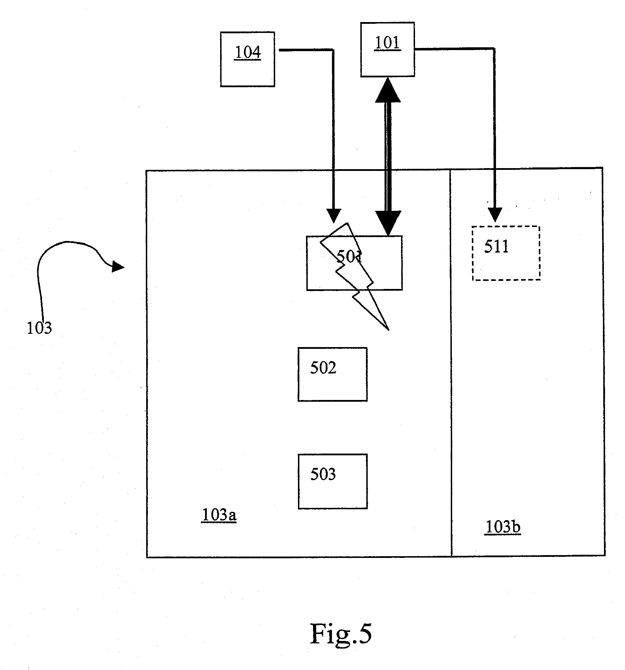

Fig. 4 is a flow diagram for forming a digital album to redisplay archived images captured by the image-capture unit in accordance with the second embodiment of the present invention. Fig. 5 is a schematic indicating the data flow in accordance with the second embodiment of the present invention.

Referring to Fig. 4 and Fig.5, initial image data, such as 501, 502 or 503, is initially captured by the image-capture unit 104 via converting a physical image into digital signals, and then the initial image data 501 (502 or 503) is stored in the first memory area 103a of the memory unit 103, shown as step S41. Referring to step S42, while the user deletes the initial image data 501 (502 or 503) from the first memory area 103a of the memory unit 103, an image-compression operation is conducted to convert the initial image data 501 (502 or 503) into compressed data 511 (512 or 513) by the image-compression unit 101 immediately prior to the deletion. The compressed data 511 (512 or 513) is then stored in the second memory area 103b of the memory unit 103, shown as step S43.

The image-compression unit 101 may conduct the image-compression operation automatically, while the deletion of the initial image data is triggered. However, in another embodiment of the present invention, the image-compression unit 101 may not conduct the image compression operation until the user of the handheld device submits a command. While the deletion command is triggered, the image-compression unit 101 may inform the user to select whether or not to conduct the image compression operation before the initial image data is deleted.

In addition, an image process can be conducted via an image-process module (not shown) to edit the initial image data for forming second data prior to the image-compression operation. For example the image process, including image editing process, zoom in / zoom out, image rearrangement, color adjustment, text editing process, image enhancement or the arbitrary combination thereof, is conducted to edit the photo image 107 further as presented on the display 102. Alternatively the image process also can be conducted to edit the compressed data further via the image-processing module after the image-compression operation.

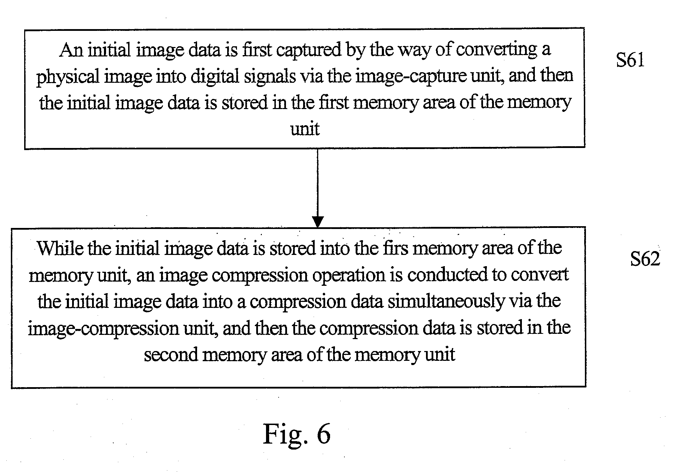

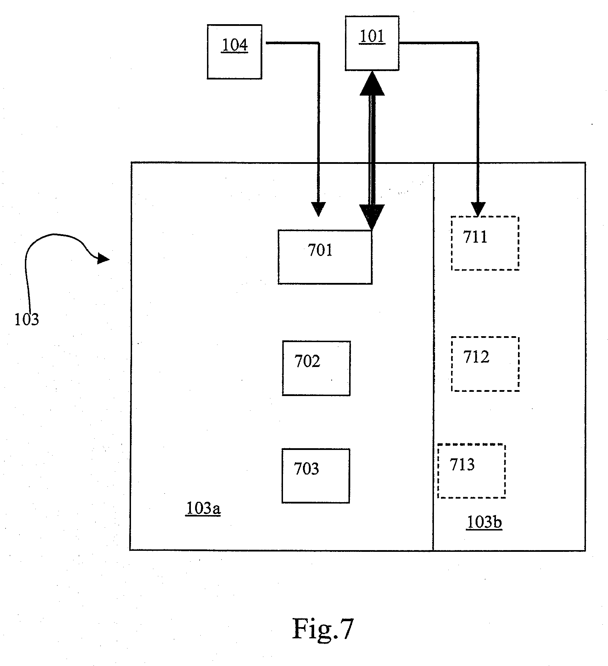

Fig. 6 is a flow diagram for configuring a digital album to redisplay archived images captured by the image-capture unit in accordance with the third embodiment of the present invention. Fig. 7 is a schematic indicating the data flow in accordance with the third embodiment of the present invention.

Referring to Fig.6 and Fig. 7, initial image data, such as 701,702, or 703, is first captured by the image-capture unit 104 via converting a physical image into digital signals, and then the initial image data 701 (702 or 703) is stored in the first memory area 103a of the memory unit 103, shown as step S61. While the initial image data 701 (702 or 703) is stored into the first memory area 103a of the memory unit 103 (referring to step S61), an image-compression operation is conducted by the image-compression unit 101 to convert the initial image data 701 (702 or 703) into compressed data 711 (712 or 713) simultaneously, and then the compressed data 711 (712 or 713) is stored in the second memory area 103b of the memory unit 103, shown as step S62.

In accordance with these preferred embodiments, it is apparent that the compressed data used to constitute the digital album is much smaller than the initial image data. Referring to Fig. 3 again, each initial image data, such as 301, 302, or 303, captured by the image-capture unit 104 can be displayed as an image having a resolution of about 5 million pixels (compared to the compressed data, such as 311, 312 or 313, that can be redisplayed on the display 102 with a resolution of 76,800 pixels). The scale of the compressed data 311 (312 or 313) is much smaller than that of the initial image data 301 (302, or 303), wherein the initial image data 301 (302, or 303) is 65 times larger than the scale of the compressed data 311 (312 or 313).

Besides reducing the resolution of images to reduce the scale of the initial image data, an alternative compression method is applied to the initial image for obtaining the compressed data. Furthermore, the two aforementioned methods can be incorporated with each other for better performance to reduce the memory scale of the initial image data. The advantage of reducing the scale of the initial image data may be enhanced by an increase of image resolution as image-capturing technology improves.

Since each initial image data can create one compressed data that is much smaller than the initial image data, the memory space occupied by the digital album is rather limited. For example, when the memory unit 103 is full, the memory space occupied by the initial image data may be about 98 %, and only 2 % of the memory space will be occupied by the compressed data (the digital album).

In accordance with the described embodiments, the advantages of the present invention are as follows: The user of a handheld device can manage (optionally to keep or delete) the initial image captured by the image-capture unit and can directly replay these images using a handheld device without the aid of an extra device or without enlarging the memory unit of the handheld device, even if the initial images were previously deleted.

Accordingly the advantage of the present invention is to provide the handheld device with an image-compression unit that can establish a digital album with a large capacity for storing archived images. Thus the user of a handheld device has more options to manage (optionally to keep or delete) the initial image stored in the memory unit and can directly redisplay these images using a handheld device without the aid of an extra device or without enlarging the memory unit of the handheld device, even if the initial images are previously deleted.

As is understood by a person skilled in the art, the foregoing preferred embodiments of the present invention are illustrative of the present invention rather than limiting of the present invention. It is intended to cover various modifications and similar arrangements included within the spirit and scope of the appended claims, the scope of which should be accorded the broadest interpretation so as to encompass all such modifications and similar structures.

## Claims

1. A handheld device with a digital album, comprising:
an image-capture unit for grabbing an initial image data;
an image-compression unit for converting the initial image data into compressed data; and
a memory unit for storing the compressed data.

2. The handheld device in accordance with claim 1, further comprising a display unit for displaying the initial image data.

3. The handheld device in accordance with claim 1 or 2, wherein the memory unit comprises a first memory area for storing the initial image data, and a second memory area for storing the compressed data.

4. The handheld device in accordance with one of the claims 1 to 3, wherein the image-compression unit has a dumping module for duplicating the data stored in a graphics accelerator card or a video card of the handheld device when the display unit displays the initial image, and then saving as an image backup data.

5. The handheld device in accordance with one of the claims 1 to 3, wherein the image-compression unit has a dumping module for capturing visible items displayed on the display unit and saving as an image backup data.

6. A method to configure a digital album of a handheld device, comprising:
capturing an initial image data by an image-capture unit of the handheld device;
conducting an image-compression operation to convert the initial image data into compressed data; and
storing the compressed data in a memory unit of the handheld device.

7. The method in accordance with claim 6, wherein the image-compression operation is automatically conducted immediately prior to the deletion of the initial image data.

8. The method in accordance with claim 6 or 7, wherein the image-compression operation is not conducted until a command is triggered.

9. The method in accordance with one of the claims 6 to 8, wherein the image-compression operation is automatically conducted intermediately after the initial image data was captured.

10. The method in accordance with one of the claims 6 to 9, further comprising an image process for editing the initial image data prior to the image-compression operation.
